# EUROPÄISCHE PATENTSCHRIFT

(11) **EP 2 774 473 B1**
(45) Veröffentlichungstag und Bekanntmachung des Hinweises auf die Patenterteilung: **09.08.2017**
(21) Anmeldenummer: 14160479.3
(22) Anmeldetag: 08.05.2009
(51) Int. Cl.: A01D 43/08, B60K 5/08

(54) **Selbstfahrende landwirtschaftliche Erntemaschine**
Self-propelled agricultural harvester
Moissonneuse automotrice

(43) Veröffentlichungstag der Anmeldung: 10.09.2014
(62) Teilanmeldung aus: 09159790.6
(73) Patentinhaber: Deere & Company, Moline, IL 61265 (US)
(72) Erfinder: Bohrer, Stefan, 66606 St. Wendel (DE); Weis, Helmut, 66506 Maßweiler (DE); Favache, Serge, 66424 Homburg (DE)
(74) Vertreter: Holst, Sönke

(56) Entgegenhaltungen:
- EP-A1- 1 609 351
- DE-A1- 3 722 367
- DE-A1- 19 606 388
- GB-A- 2 105 964

## Beschreibung

Die Erfindung betrifft eine selbstfahrende landwirtschaftliche Erntemaschine.

### Stand der Technik

Die DE 37 22 367 A1 beschreibt einen landwirtschaftlichen Feldhäcksler mit einem einzigen, über der Hinterachse angeordneten Verbrennungsmotor, dessen Kurbelwelle sich in Fahrtrichtung nach vorn erstreckt und über eine Gelenkwelle mit einem Kegelrad-Verteilergetriebe verbunden ist, das eine sich quer zur Vorwärtsrichtung erstreckende Abtriebswelle antreibt, welche wiederum über einen Riementrieb eine Häckseltrommel in Drehung versetzt. Das Kegelrad-Verteilergetriebe treibt weiterhin die Vorderräder des Feldhäckslers mechanisch an, und von der mit der Gelenkwelle verbundenen Eingangswelle des Kegelrad-Verteilergetriebes wird der Antrieb für den Erntevorsatz und die Vorpresswalzen abgeleitet.

Die nachveröffentlichte EP 2 145 527 A2 beschreibt eine Erntemaschine mit einem Verbrennungsmotor, dessen Kurbelwelle in Vorwärtsrichtung orientiert ist und über ein Winkelgetriebe eine Querwelle antreibt, die sich durch eine Riemenscheibe hindurch erstreckt. Auf der dem Winkelgetriebe abgewandten Seite der Riemenscheibe befindet sich eine Kupplung, an deren Ausgangsseite eine Hohlwelle angebracht ist, die mit der Riemenscheibe antriebsverbunden ist und zusätzlich ein Pumpenaggregat antreibt, das eine Pumpe zum hydraulischen Antrieb eines Motors für einen Erntevorsatz und eine Pumpe zum hydraulischen Antrieb eines Erntevorsatzes umfasst.

### Aufgabe der Erfindung

Die der Erfindung zu Grunde liegende Aufgabe wird darin gesehen, eine Antriebsanordnung für eine selbstfahrende Erntemaschine mit längs eingebauten Verbrennungsmotoren bereitzustellen, die auf einfache und wirkungsgradgünstige Weise einen Antrieb eines quer liegenden Antriebsriemens für den Antrieb der größeren Verbraucher der Erntemaschine sowie der hydraulischen Pumpen ermöglicht.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine selbstfahrende landwirtschaftliche Erntemaschine umfasst:
einen sich in einer Vorwärtsfahrtrichtung erstreckenden Rahmen, der durch im Eingriff mit dem Erdboden befindliche Mittel abgestützt wird und durch die genannten Mittel in der Vorwärtsrichtung bewegbar ist,
Arbeitsorgane zur Aufnahme und/oder Bearbeitung von Erntegut, die über einen Treibriemen antreibbar sind, der durch eine Riemenscheibe mit horizontal und quer zur Vorwärtsrichtung orientierter Drehachse antreibbar ist,
einen am Rahmen abgestützten Verbrennungsmotor mit einer sich in der Vorwärtsrichtung erstreckenden Kurbelwelle,
und ein in Vorwärtsrichtung vor dem Verbrennungsmotor angeordnetes Winkelgetriebe, das mit der Kurbelwelle und mit einer quer angeordneten Querwelle antriebsverbindbar oder antriebsverbunden ist, wobei die Querwelle mit der Riemenscheibe verbindbar oder verbunden ist und ein Pumpenaggregat antreibt, das eine Hydropumpe zum Antrieb von Hydromotoren für den Vortrieb der Erntemaschine, eine Lenkpumpe und eine Hydropumpe zur Ölversorgung der Steuerung des hydrostatischen Antriebs für den Vortrieb der Erntemaschine umfasst,
und wobei sich ein Abschnitt der Querwelle durch die Riemenscheibe erstreckt und eine zum Ein- und Ausschalten des Treibriemens dienende Kupplung auf der dem Winkelgetriebe abgewandten Seite der Riemenscheibe mit dem Abschnitt der Querwelle verbunden und ausgangsseitig durch eine Hohlwelle, innerhalb der sich der Abschnitt der Querwelle befindet, mit der Riemenscheibe und einem Antriebsstrang einer Hydropumpe zum Antrieb eines Hydromotors zum Antrieb eines Einzugsförderers und/oder Erntevorsatzes verbunden ist.

Die selbstfahrende landwirtschaftliche Erntemaschine umfasst einen sich in einer Vorwärtsfahrtrichtung erstreckenden Rahmen, der durch im Eingriff mit dem Erdboden befindliche Mittel (in der Regel Räder oder Gummiraupenlaufwerke) abgestützt wird und durch die genannten Mittel in der Vorwärtsrichtung bewegbar ist. Die Erntemaschine weist weiterhin Arbeitsorgane zur Aufnahme und/oder Bearbeitung von Erntegut auf, die über einen Treibriemen antreibbar sind, der durch eine Riemenscheibe mit horizontal und quer zur Vorwärtsrichtung orientierter Drehachse antreibbar ist. Um den Antrieb der Arbeitsorgane zur Aufnahme und/oder Bearbeitung von Erntegut abschalten zu können, beispielsweise während einer Straßenfahrt, ist zwischen der Querwelle und der Riemenscheibe die erwähnte Kupplung angebracht. Ein Abschnitt der Querwelle erstreckt sich durch eine mit der Riemenscheibe verbundene Hohlwelle hindurch bis zur Kupplung, die sich demnach auf der von dem Winkelgetriebe abgewandten Seite der Riemenscheibe befindet. Die Hohlwelle treibt dann von der Kupplung aus die Riemenscheibe und auch den Antriebsstrang einer Hydropumpe zum Antrieb eines Einzugsförderers der Erntemaschine an.

Vorzugsweise sind am Rahmen seitlich nebeneinander zwei Verbrennungsmotoren angebracht, deren Kurbelwellen sich in der Vorwärtsrichtung erstrecken. Ein Verbindungsgetriebe ist in Vorwärtsrichtung vor den Verbrennungsmotoren angeordnet und besteht aus zwei Winkelgetrieben, beispielsweise Kegelradgetrieben, die mit jeweils einer Kurbelwelle der Verbrennungsmotoren einerseits und der quer angeordneten Querwelle andererseits verbunden sind, die wiederum mit der Riemenscheibe verbindbar oder verbunden ist.

Bei einer bevorzugten Ausführungsform der Erfindung besteht die Möglichkeit, im Bedarfsfall (d. h. bei kleinem Antriebsleistungsbedarf, beispielsweise bei der Straßenfahrt oder Grasernte) nur einen der beiden Verbrennungsmotoren in Betrieb zu setzen und den anderen abzuschalten. Um den jeweils anderen Verbrennungsmotor nicht unnötig mitdrehen zu lassen, wird vorgeschlagen, zwischen der Kurbelwelle des ersten bzw. zweiten Verbrennungsmotors und der Querwelle eine Kupplung anzubringen, die ein Abtrennen des jeweils nicht benötigten Verbrennungsmotors vom Antriebsstrang erlaubt. Dabei ist bevorzugt, dass jeder der Verbrennungsmotoren abgeschaltet und vom Antriebsstrang getrennt werden kann, damit beide einem möglichst ähnlichen Verschleiß unterliegen. Die Kupplungen können sich an beliebiger geeigneter Stelle befinden, d. h. beim von der Riemenscheibe weiter beabstandeten, ersten Verbrennungsmotor an der Eingangsseite oder an der Ausgangsseite des Winkelgetriebes und beim der Riemenscheibe benachbarten Verbrennungsmotor an der Eingangsseite des Winkelgetriebes.

Die Querwelle treibt neben dem Treibriemen auch ein Pumpenaggregat an, das beispielsweise eine Hydropumpe zum Antrieb von Hydromotoren für den Vortrieb der Erntemaschine, eine Lenkpumpe, eine Hydropumpe zum Antrieb von Hydromotoren für einen Erntevorsatz oder eine Hydropumpe zur Ölversorgung der Steuerung des hydrostatischen Antriebs für den Vortrieb der Erntemaschine antreibt. Dieses Pumpenaggregat wird zweckmäßigerweise von der Ausgangsseite der erwähnten Kupplungen her angetrieben, beispielsweise von einer Welle her, die zwischen der ersten Kupplung des ersten Verbrennungsmotors und dem ersten Winkelgetriebe angeordnet ist, oder von Welle her, die zwischen der zweiten Kupplung des zweiten Verbrennungsmotors und dem zweiten Winkelgetriebe positioniert ist. Auch ein von der Querwelle her abgeleiteter Antrieb des Pumpenaggregats wäre denkbar.

Die Verbrennungsmotoren werden auf Grund ihrer relativ großen Masse unabhängig am Rahmen der Erntemaschine befestigt, in der Regel über schwingungsdämpfende Elemente. Die Winkelgetriebe und ggf. die zwischen den Verbrennungsmotoren und den Winkelgetrieben angeordneten Kupplungen können am zugehörigen Verbrennungsmotor befestigt werden. Um mögliche Toleranzen und Abweichungen der Einbaupositionen der Verbrennungsmotoren und der Winkelgetriebe auszugleichen und eine eventuelle, unerwünschte Übertragung von Schwingungen eines Verbrennungsmotors auf den anderen Verbrennungsmotor zu vermeiden, ist es bevorzugt, in die Querwelle zwischen den beiden Winkelgetrieben eine Gelenkwelle einzufügen. Die Querwelle setzt sich demnach aus einzelnen Abschnitten zusammen, von denen jeweils einer mit einem Winkelgetriebe direkt verbunden ist, wobei die Abschnitte zwischen den Winkelgetrieben untereinander durch die Gelenkwelle verbunden sind. Die Gelenkwelle kann teleskopierbar oder nicht längenveränderlich sein.

### Ausführungsbeispiel

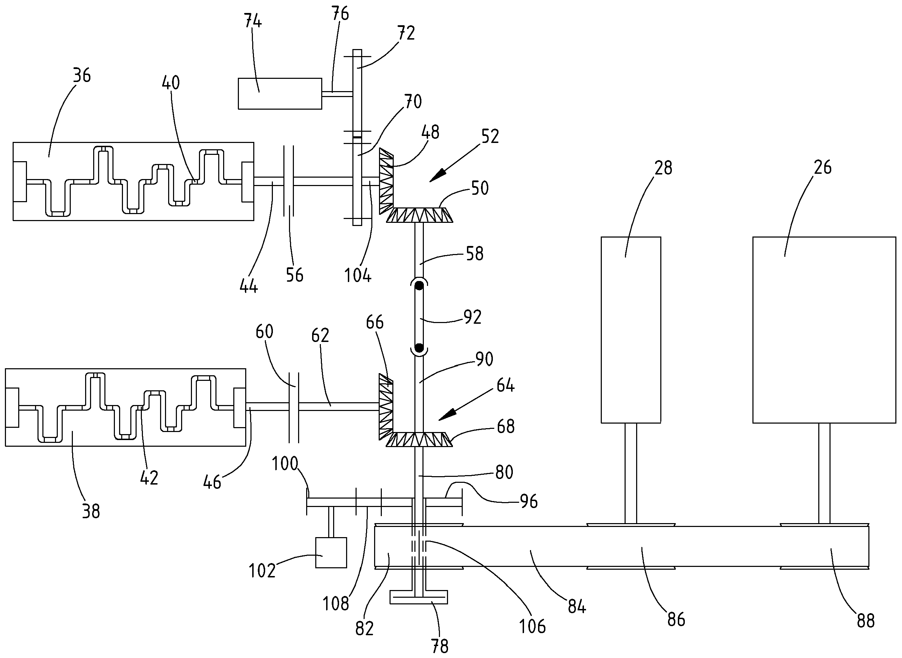

Anhand der Abbildungen werden zwei Ausführungsbeispiele der Erfindung erläutert, wobei nur die Ausführungsform nach Figur 3 unter den Anspruch 1 fällt. Es zeigen:
- Fig. 1: eine schematische seitliche Ansicht einer selbstfahrenden Erntemaschine in Form eines Feldhäckslers,
- Fig. 2: eine schematische Draufsicht auf eine erste Ausführungsform der Antriebsanordnung der Erntemaschine, und
- Fig. 3: eine schematische Draufsicht auf eine zweite Ausführungsform der Antriebsanordnung der Erntemaschine.

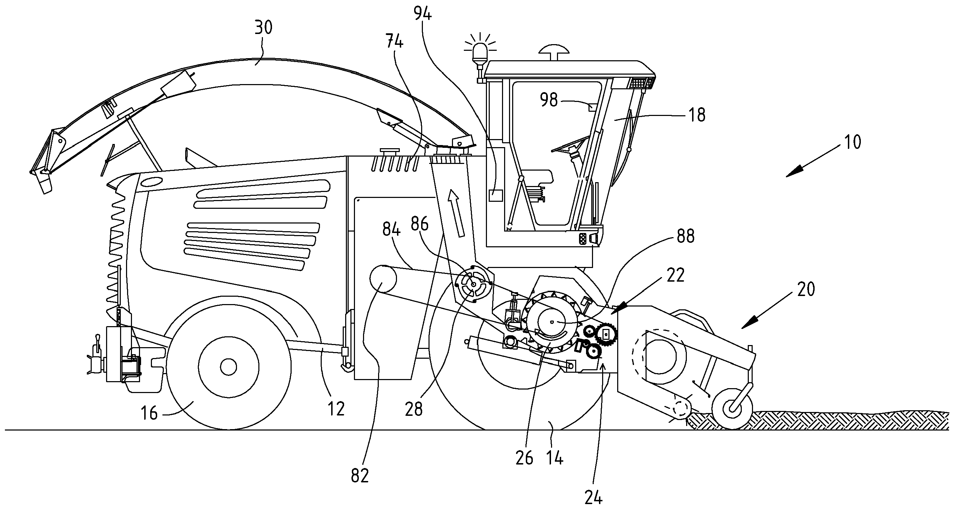

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsbewegungsrichtung V der Erntemaschine 10, die in der Figur 1 nach rechts verläuft.

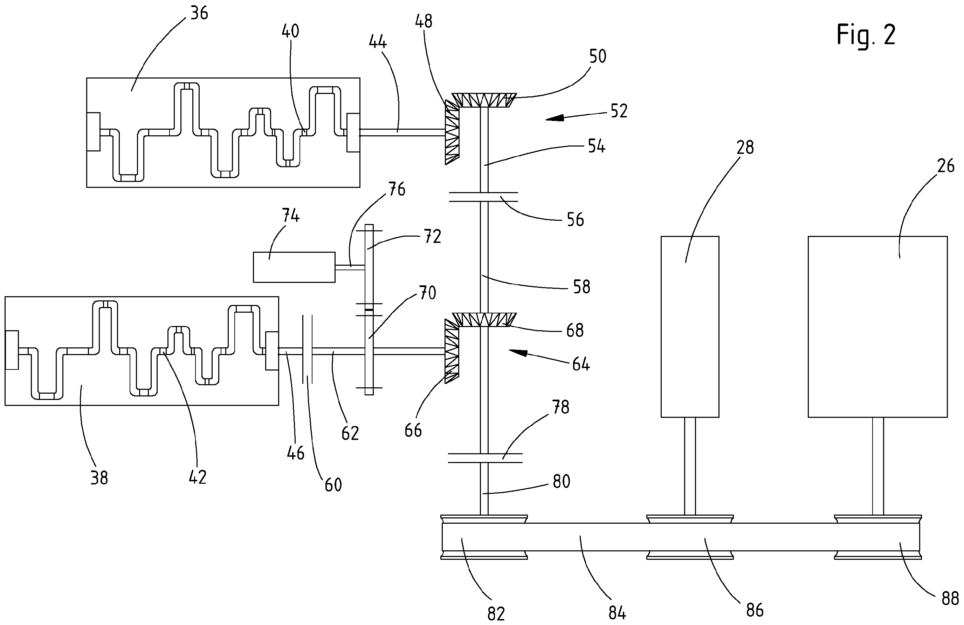

Die Figur 2 zeigt eine Draufsicht auf die Antriebsanordnung der Erntemaschine 10. Im rückwärtigen Bereich der Erntemaschine 10 befinden sich zwei rückwärtig der Hinterachse angeordnete (erste und zweite) Verbrennungsmotoren 36, 38 insbesondere in Form von Dieselmotoren, die seitlich nebeneinander angeordnet und mit Längsträgern und/oder Querträgern des Rahmens 12 verbunden sind und sich jeweils separat auf dem Rahmen 12 abstützen, oder auf einem Hilfsrahmen montiert sind, der wiederum am Rahmen 12 befestigt ist. Zwischen den Verbrennungsmotoren 36, 38 und dem Rahmen 12 bzw. dem Hilfsrahmen können jeweils schwingungsdämpfende Gummi-Metall-Elemente angeordnet sein. Die Leistungen der Verbrennungsmotoren 36, 38 sind vorzugsweise identisch, obwohl auch Verbrennungsmotoren 36, 38 unterschiedlicher Leistung verwendbar wären. Die Verbrennungsmotoren 36, 38 erstrecken sich in der Vorwärtsrichtung der Erntemaschine 10 bis etwa zum rückwärtigen Ende des Rahmens 12 und umfassen (erste und zweite) Kurbelwellen 40, 42, die sich nach vorn aus den Gehäusen der Verbrennungsmotoren 36, 38 heraus erstrecken. Die Kurbelwellen 40, 42 treiben jeweils eine sich horizontal und nach vorn erstreckende (erste und zweite) Längswelle 44, 46 an.

Die erste Längswelle 44 ist an ihrem vorderen Ende mit einem ersten Winkelgetriebe 52 verbunden, das sich aus einem ersten Kegelzahnrad 48, welches direkt mit der ersten Längswelle 44 verbunden ist, und aus einem zweiten Kegelzahnrad 50 zusammensetzt, das mit dem ersten Kegelzahnrad 48 kämmt. Die Drehachse des zweiten Kegelzahnrads 50 erstreckt sich horizontal und quer zur Vorwärtsrichtung. Das zweite Kegelzahnrad 50 ist mit einem Abschnitt 54 einer ersten Querwelle 54, 58, 80 verbunden, der wiederum mit einer ersten Kupplung 56 verbunden ist, welche ausgangsseitig mit einer zweiten Abschnitt 58 der Querwelle 54, 58, 80 gekoppelt ist.

Die zweite Längswelle 46 ist an ihrem vorderen Ende mit einer zweiten Kupplung 60 verbunden, die ausgangsseitig mit einer dritten Längswelle 62 gekoppelt ist, die sich koaxial zur Längswelle 46 erstreckt. Die Längswelle 62 ist an ihrem vorderen Ende mit einem zweiten Winkelgetriebe 64 verbunden, das sich aus einem ersten Kegelzahnrad 66, welches direkt mit der dritten Längswelle 62 verbunden ist, und aus einem zweiten Kegelzahnrad 68 zusammensetzt, das mit dem ersten Kegelzahnrad 66 kämmt. Die Drehachse des zweiten Kegelzahnrads 68 erstreckt sich horizontal und quer zur Vorwärtsrichtung und das zweite Kegelzahnrad 68 ist starr mit dem zweiten Abschnitt 58 der Querwelle 54, 58, 80 gekoppelt.

Die dritte Längswelle 62 trägt zwischen der zweiten Kupplung 60 und dem ersten Kegelzahnrad 66 des zweiten Winkelgetriebes 64 noch ein am Umfang verzahntes Zahnrad 70, das mit einem weiteren Zahnrad 72 kämmt, welches über eine fünfte Längswelle 76 ein Pumpenaggregat 74 antreibt, das eine Hydropumpe zum Antrieb von Hydromotoren für den Vortrieb der Erntemaschine, eine Lenkpumpe, eine Hydropumpe zum Antrieb von Hydromotoren für den Erntevorsatz 20 und eine Hydropumpe zur Ölversorgung der Steuerung des hydrostatischen Antriebs für den Vortrieb der Erntemaschine 10 umfasst.

Der zweite Abschnitt 58 der Querwelle 54, 58, 80 ist an ihrem von der ersten Kupplung 56 beabstandeten Ende mit einer dritten Kupplung 78 verbunden, die ausgangsseitig über einen dritten Abschnitt 80 der Querwelle 54, 58, 80 eine Riemenscheibe 82 antreibt. Die Riemenscheibe 82 wird von einem Treibriemen 84 umschlungen, der auch eine Riemenscheibe 86 für den Antrieb der Fördereinrichtung 28 und eine Riemenscheibe 88 zum Antrieb der Häckseltrommel 26 umschlingt. Anstelle der oder zusätzlich zur dritten Kupplung 78 kann der Antriebsstrang der Häckseltrommel 26 und der Fördervorrichtung 28 durch einen Mechanismus zum Spannen und Lösen des Treibriemens 84 in Bewegung versetzt oder angehalten werden.

Die Winkelgetriebe 52, 64 realisieren nach alledem ein einfach aufgebautes und effizientes Verbindungsgetriebe, über das die Verbrennungsmotoren 36 und/oder 38 die Riemenscheibe 82 antreiben können. Anstelle der Kegelzahnräder 48, 50, 66, 68 könnten auch Schneckenräder und damit kämmende Zahnräder verwendet werden, was auch für die zweite Ausführungsform gilt.

Bei der in der Figur 3 dargestellten, zweiten Ausführungsform des Antriebsstrangs der Erntemaschine 10 sind mit der ersten Ausführungsform übereinstimmende Elemente mit denselben Bezugszeichen gekennzeichnet. Bei dieser zweiten Ausführungsform sind die Verbrennungsmotoren 36, 38 in Vorwärtsrichtung miteinander ausgerichtet, was selbstverständlich auch bei der ersten Ausführungsform möglich wäre. Der erste Verbrennungsmotor 36 treibt im Betrieb mit seiner Kurbelwelle 40 die erste Längswelle 44 an, die mit der Eingangsseite der ersten Kupplung 56 verbunden ist. Die Ausgangsseite der ersten Kupplung 56 ist über eine vierte Längswelle 104 mit dem ersten Kegelzahnrad 48 des ersten Winkelgetriebes 52 verbunden. Die vierte Längswelle 104 treibt auch über die Zahnräder 70, 72 und die fünfte Längswelle 76 das Pumpenaggregat 74 an. Es wäre auch denkbar, über eines der Zahnräder 70, 72 oder ein dazwischen angeordnetes Zahnrad (nicht gezeigt) weitere permanent angetriebene Elemente, wie einen elektrischen Generator und/oder einen Gebläseantrieb für die Kühlluftzufuhr für die Verbrennungsmotoren 36, 38 anzutreiben.

Das zweite Kegelzahnrad 50 des ersten Winkelgetriebes 52 ist mit einem ersten Abschnitt 58 der Querwelle 58, 80, 90 verbunden, der wiederum über eine Gelenkwelle 92 mit einem zweiten Abschnitt 90 der Querwelle 58, 80, 90 verbunden ist, der sich bis zum zweiten Kegelzahnrad 68 des zweiten Winkelgetriebes 64 erstreckt. Der zweite Verbrennungsmotor 38 treibt im Betrieb mit seiner Kurbelwelle 42 die zweite Längswelle 46 an, die mit der Eingangsseite der zweiten Kupplung 60 verbunden ist. Die Ausgangsseite der zweiten Kupplung 60 ist über die dritte Längswelle 62 mit dem ersten Kegelzahnrad 66 des zweiten Winkelgetriebes 64 verbunden.

Die Verbrennungsmotoren 36, 38 sind getrennt voneinander am Rahmen 12 oder einem Hilfsrahmen befestigt, in der Regel über Dämpfungselemente. An ihren Gehäusen sind auch die zugehörigen Kupplungen 56 bzw. 60 und Winkelgetriebe 52, 64 befestigt. Die Gelenkwelle 92 ermöglicht den Ausgleich von möglichen Toleranzen der Positionen der Verbrennungsmotoren 36, 38 und der Winkelgetriebe 52, 64.

Der zweite Abschnitt 90 der Querwelle 58, 80, 90 und das zweite Kegelzahnrad 68 des zweiten Winkelgetriebes 64 sind mit einem äußeren Abschnitt 80 der Querwelle 58, 80, 90 verbunden, der sich durch eine mit der Riemenscheibe 82 verbundene Hohlwelle 106 hindurch auf die von den Winkelgetrieben 52, 64 abgewandte Seite der Riemenscheibe 82 erstreckt und dort mit einer dritten Kupplung 78 verbunden ist. Die dritte Kupplung 78 ist ausgangsseitig mit der Hohlwelle 106 verbunden, die außerdem auf der den Winkelgetrieben 52, 64 zugewandten Seite der Riemenscheibe 82 über Zahnräder 96, 108 und 100 eine Hydropumpe 102 antreibt, die zum Antrieb eines Hydromotors (nicht gezeigt) zum Antrieb des Einzugsförderers 22 dient. Die dritte Kupplung 78 ermöglicht es, den Treibriemen 84 und mit ihm die Häckseltrommel 26 und die Fördervorrichtung 28 ein- und auszuschalten. Die Zahnräder 96, 108 und 100 können innerhalb eines Gehäuses angebracht werden, das am Gehäuse des zweiten Winkelgetriebes 64 befestigt ist. Die Zahnräder 70 und 72 sind hingegen vorzugsweise innerhalb des Gehäuses des ersten Winkelgetriebes 52 und der ersten Kupplung 56 integriert.

Eine geeignete Steuerung 94 (s. Figur 1) dient bei beiden Ausführungsformen zum Zuschalten und Abtrennen der Verbrennungsmotoren 36, 38 vom Antriebsstrang. Die Steuerung 94 ist mit den Kupplungen 56, 60 und 78 und mit Motorsteuerungen (nicht gezeigt) der Verbrennungsmotoren 36 und 38 verbunden. Es sind neben dem Stillstand der Verbrennungsmotoren 36, 38 drei Betriebsarten möglich. Bei größeren Leistungsanforderungen, beispielsweise bei der Maisernte mit einem anstelle des Aufnehmers 20 montierten Mähvorsatz (nicht gezeigt), laufen beide Verbrennungsmotoren 36, 38, und die Kupplungen 56 und 60 sind geschlossen. Die dritte Kupplung 78 dient in an sich bekannter Weise dazu, die Fördereinrichtung 28 und die Häckseltrommel 26 bei Bedarf ein- und auszuschalten, wozu eine geeignete Schnittstelle 98 (z. B. Schalter) mit der Steuerung 94 verbunden ist. Bei geringeren Leistungsanforderungen, z. B. bei der Ernte eines Schwads mittels des in Figur 1 dargestellten Aufnehmers 20 oder bei einer Straßenfahrt oder wenn bei der Maisernte nur einzelne Reihen am Feldrand zu ernten sind, wird nur einer der Verbrennungsmotoren 36 oder 38 benötigt, während der jeweils andere Verbrennungsmotor 38 oder 36 in den Stillstand versetzt wird. Die dem jeweils nicht benötigten Verbrennungsmotor 38 oder 36 zugeordnete Kupplung 60 oder 56 wird dann geöffnet, während die andere Kupplung 56 oder 60 geschlossen ist und auch das Pumpenaggregat 74 antreibt. Wenn später wieder beide Verbrennungsmotoren 36 und 38 benötigt werden, wird der stehende Verbrennungsmotor 38 oder 36 angelassen, auf die Drehzahl des laufenden Verbrennungsmotors 36 oder 38 gebracht und die zugehörige Kupplung 60 oder 56 geschlossen. Es wäre auch möglich, zum Anlassen des stehenden Verbrennungsmotors 38 oder 36 die zugehörige Kupplung 60 oder 56 zu schließen und ihn damit zu starten.

Das Zuschalten oder Abschalten eines Verbrennungsmotors 36 oder 38 zum oder vom Antriebsstrang kann durch eine Bedienereingabe mittels der Schnittstelle 98 oder selbsttätig durch die Steuerung 94 erfolgen, z. B. auf einer Lasterfassung der Verbrennungsmotoren 36 und/oder 38 (beispielsweise anhand seiner Drehzahl) oder auf einem Drehmomentsensor im Antriebsstrang basierend. Es wäre auch denkbar, durch die Steuerung 94 einen der Verbrennungsmotoren 36, 38 selbsttätig abzuschalten, wenn sich ein Straßen/Feldbetriebsschalter der Schnittstelle 98 in der Straßenbetriebsstellung befindet, und ihn selbsttätig zuzuschalten, wenn sich der Straßen/Feldbetriebsschalter in der Feldbetriebsstellung befindet und eine selbsttätige Erntevorsatzerkennung (s. EP 0 377 163 A oder DE 199 49 994 A) signalisiert, dass ein Maiserntevorsatz montiert ist, während einer der Verbrennungsmotoren 36, 38 bei Erkennung eines Erntevorsatzes 20 in Form eines Aufnehmers (wie in der Figur 1 gezeigt) stets ausgeschaltet bleibt. Die Steuerung 94 verwendet im Einmotorenbetrieb beide Verbrennungsmotoren 36, 38 wechselweise, um ihre Abnutzung etwa gleich zu halten.

## Patentansprüche

1. Selbstfahrende landwirtschaftliche Erntemaschine (10), umfassend:
einen sich in einer Vorwärtsfahrtrichtung erstreckenden Rahmen (12), der durch im Eingriff mit dem Erdboden befindliche Mittel (14, 16) abgestützt wird und durch die genannten Mittel (14, 16) in der Vorwärtsrichtung bewegbar ist,
Arbeitsorgane (26, 28) zur Aufnahme und/oder Bearbeitung von Erntegut, die über einen Treibriemen (84) antreibbar sind, der durch eine Riemenscheibe (82) mit horizontal und quer zur Vorwärtsrichtung orientierter Drehachse antreibbar ist,
einen am Rahmen (12) abgestützten Verbrennungsmotor (36, 38) mit einer sich in der Vorwärtsrichtung erstreckenden Kurbelwelle (40, 42),
und ein in Vorwärtsrichtung vor dem Verbrennungsmotor (36, 38) angeordnetes, am Gehäuse des Verbrennungsmotors (36, 38) befestigtes Winkelgetriebe (52, 64), das mit der Kurbelwelle (40, 42) und mit einer quer angeordneten Querwelle (54, 58, 80, 90) antriebsverbindbar oder antriebsverbunden ist, wobei die Querwelle (54, 58, 80, 90) mit der Riemenscheibe (82) verbindbar oder verbunden ist,
und wobei sich ein Abschnitt (80) der Querwelle (54, 58, 80, 90) durch die Riemenscheibe (82) erstreckt und eine zum Ein- und Ausschalten des Treibriemens (84) dienende Kupplung (78) auf der dem Winkelgetriebe (52, 64) abgewandten Seite der Riemenscheibe (82) mit dem Abschnitt (80) der Querwelle (54, 58, 80, 90) verbunden und ausgangsseitig durch eine Hohlwelle (106), innerhalb der sich der Abschnitt (80) der Querwelle (54, 58, 80, 90) befindet, mit der Riemenscheibe (82) und einem Antriebsstrang einer Hydropumpe (102) zum Antrieb eines Hydromotors zum Antrieb eines Einzugsförderers (22) und/oder Erntevorsatzes (20) verbunden ist.

2. Erntemaschine (10) nach Anspruch 1, umfassend:
einen am Rahmen (12) abgestützten ersten Verbrennungsmotor (36) mit einer ersten Kurbelwelle (40), und
einen am Rahmen (12) abgestützten zweiten Verbrennungsmotor (38) mit einer zweiten Kurbelwelle (42),
wobei ein in Vorwärtsrichtung vor den Verbrennungsmotoren (36, 38) angeordnetes Verbindungsgetriebe mit der ersten Kurbelwelle (40), der zweiten Kurbelwelle (42) und der Riemenscheibe (82) antriebsverbunden oder -bindbar ist,
die beiden Verbrennungsmotoren (36, 38) bezüglich der Vorwärtsrichtung seitlich nebeneinander angeordnet sind und die Kurbelwellen (40, 42) sich in der Vorwärtsrichtung erstrecken,
und das Verbindungsgetriebe zwei Winkelgetriebe (52, 64) umfasst, die jeweils mit einer der Kurbelwellen (40, 42) und mit der quer angeordneten Querwelle (54, 58, 80, 90) antriebsverbindbar oder antriebsverbunden sind.

3. Erntemaschine (10) nach Anspruch 2, wobei eine erste Kupplung (56) zwischen der ersten Kurbelwelle (40) und der Querwelle (54, 58, 80, 90) angeordnet ist.

4. Erntemaschine (10) nach Anspruch 3, wobei die erste Kupplung (56) zwischen der ersten Kurbelwelle (40) und einem ersten Winkelgetriebe (52) angeordnet ist.

5. Erntemaschine (10) nach einem der Ansprüche 2 bis 4, wobei eine zweite Kupplung (60) zwischen der zweiten Kurbelwelle (42) und der Querwelle (54, 58, 80, 90) angeordnet ist.

6. Erntemaschine (10) nach Anspruch 5, wobei die zweite Kupplung (60) zwischen der zweiten Kurbelwelle (42) und einem zweiten Winkelgetriebe (64) angeordnet ist.

7. Erntemaschine (10) nach einem der Ansprüche 2 bis 6, wobei ein Pumpenaggregat (74) mit der Abtriebsseite der Kupplungen (56, 60) in Antriebsverbindung steht.

8. Erntemaschine (10) nach Anspruch 7, wobei das Pumpenaggregat (74) durch eine Antriebsverbindung antreibbar ist, die durch eine zwischen der ersten Kupplung (56) und dem ersten, von der Riemenscheibe beabstandeten Winkelgetriebe (52) angeordnete Welle (104) antreibbar ist.

9. Erntemaschine (10) nach einem Ansprüche 2 bis 8, wobei die Verbrennungsmotoren (36, 38) unabhängig voneinander am Rahmen (12) der Erntemaschine befestigt sind.

10. Erntemaschine (10) nach einem der Ansprüche 2 bis 9, wobei die Winkelgetriebe (52, 64) jeweils am Verbrennungsmotor (36, 38) befestigt sind.

11. Erntemaschine (10) nach einem der Ansprüche 2 bis 10, wobei die Querwelle (58, 80, 90) sich zwischen den Winkelgetrieben (52, 64) aus mehreren, getrennten Abschnitten (58, 80, 90) zusammensetzt und zwischen die jeweils mit einem Winkelgetriebe (52, 64) verbundenen Abschnitte (58, 90) der Querwelle (58, 80, 90) eine Gelenkwelle (92) eingefügt ist.

12. Erntemaschine (10) nach einem der vorhergehenden Ansprüche, **dadurch gekennzeichnet, dass** die Winkelgetriebe (52, 64) Kegelzahnradgetriebe sind.

## Claims

1. Self-propelled agricultural harvester (10), comprising:
a frame (12) which extends in a forward movement direction, is supported by way of means (14, 16) which are situated in engagement with the soil, and can be moved in the forward direction by way of the said means (14, 16),
working members (26, 28) for receiving and/or processing crops, which working members (26, 28) can be driven via a drive belt (84) which can be driven by way of a pulley wheel (82) with a rotational axis which is oriented horizontally and transversely with respect to the forward direction,
an internal combustion engine (36, 38) which is supported on the frame (12), with a crankshaft (40, 42) which extends in the forward direction,
and an angular gear mechanism (52, 64) which is arranged in front of the internal combustion engine (36, 38) in the forward direction, is fastened to the housing of the internal combustion engine (36, 38), and can be drive-connected or is drive-connected to the crankshaft (40, 42) and to a transversely arranged transverse shaft (54, 58, 80, 90), the transverse shaft (54, 58, 80, 90) being capable of being connected or being connected to the pulley wheel (82),
and a section (80) of the transverse shaft (54, 58, 80, 90) extending through the pulley wheel (82), and a clutch (78) which serves to connect and disconnect the drive belt (84) being connected on that side of the pulley wheel (82) which faces away from the angular gear mechanism (52, 64) to the section (80) of the transverse shaft (54, 58, 80, 90), and being connected on the output side by way of a hollow shaft (106), within which the section (80) of the transverse shaft (54, 58, 80, 90) is situated, to the pulley wheel (82) and a drive train of a hydraulic pump (102) for driving a hydraulic motor for driving a draw-in conveyor (22) and/or harvesting attachment (20).

2. Harvester (10) according to Claim 1, comprising:
a first internal combustion engine (36) which is supported on the frame (12), with a first crankshaft (40), and
a second internal combustion engine (38) which is supported on the frame (12), with a second crankshaft (42),
a connecting gear mechanism which is arranged in front of the internal combustion engines (36, 38) in the forward direction being drive-connected or being capable of being drive-connected to the first crankshaft (40), the second crankshaft (42) and the pulley wheel (82),
the two internal combustion engines (36, 38) being arranged laterally next to one another with regard to the forward direction, and the crankshafts (40, 42) extending in the forward direction, and the connecting gear mechanism comprising two angular gear mechanisms (52, 64) which can be drive-connected or are drive-connected in each case to one of the crankshafts (40, 42) and to the transversely arranged transverse shaft (54, 58, 80, 90).

3. Harvester (10) according to Claim 2, a first clutch (56) being arranged between the first crankshaft (40) and the transverse shaft (54, 58, 80, 90).

4. Harvester (10) according to Claim 3, the first clutch (56) being arranged between the first crankshaft (40) and a first angular gear mechanism (52).

5. Harvester (10) according to one of Claims 2 to 4, a second clutch (60) being arranged between the second crankshaft (42) and the transverse shaft (54, 58, 80, 90).

6. Harvester (10) according to Claim 5, the second clutch (60) being arranged between the second crankshaft (42) and a second angular gear mechanism (64).

7. Harvester (10) according to one of Claims 2 to 6, a pump unit (74) being drive-connected to the output side of the clutches (56, 60).

8. Harvester (10) according to Claim 7, it being possible for the pump unit (74) to be driven by way of a drive connection which can be driven by way of a shaft (104) which is arranged between the first clutch (56) and the first angular gear mechanism (52) which is spaced apart from the pulley wheel.

9. Harvester (10) according to one of Claims 2 to 8, the internal combustion engines (36, 38) being fastened to the frame (12) of the harvester independently of one another.

10. Harvester (10) according to one of Claims 2 to 9, the angular gear mechanisms (52, 64) being fastened in each case to the internal combustion engine (36, 38).

11. Harvester (10) according to one of Claims 2 to 10, the transverse shaft (58, 80, 90) being assembled between the angular gear mechanisms (52, 64) from a plurality of separate sections (58, 80, 90), and an articulated shaft (92) being inserted between those sections (58, 90) of the transverse shaft (58, 80, 90) which are connected in each case to an angular gear mechanism (52, 64).

12. Harvester (10) according to one of the preceding claims, **characterized in that** the angular gear mechanisms (52, 64) are bevel gearwheel mechanisms.

## Revendications

1. Moissonneuse agricole automotrice (10), comprenant :
un châssis (12) s'étendant dans une direction de conduite en marche avant, qui est supporté par des moyens (14, 16) en prise avec le sol et qui peut être déplacé dans la direction de marche avant par lesdits moyens (14, 16),
des organes de travail (26, 28) pour recevoir et/ou traiter la récolte, lesquels peuvent être entraînés par une courroie d'entraînement (84) qui peut être entraînée par une poulie à courroie (82) ayant un axe de rotation orienté horizontalement et transversalement par rapport à la direction de marche avant,
un moteur à combustion (36, 38) supporté sur le châssis (12), avec un vilebrequin (40, 42) s'étendant dans la direction de marche avant,
et un renvoi d'angle (52, 64) disposé, dans la direction de marche avant, avant le moteur à combustion (36, 38), fixé au boîtier du moteur à combustion (36, 38), lequel est ou peut être en liaison d'entraînement avec le vilebrequin (40, 42) et avec un arbre transversal (54, 58, 80, 90) disposé transversalement, l'arbre transversal (54, 58, 80, 90) étant ou pouvant être connecté à la poulie à courroie (82),
et une portion (80) de l'arbre transversal (54, 58, 80, 90) s'étendant à travers la poulie à courroie (82), et un accouplement (78) servant à connecter ou déconnecter la courroie d'entraînement (84) étant raccordé, du côté de la poulie à courroie (82) opposé au renvoi d'angle (52, 64), à la portion (80) de l'arbre transversal (54, 58, 80, 90) et
étant raccordé, du côté de la sortie, par un arbre creux (106) à l'intérieur duquel se trouve la portion (80) de l'arbre transversal (54, 58, 80, 90), à la poulie à courroie (82) et à une chaîne cinématique d'une pompe hydraulique (102) pour l'entraînement d'un moteur hydraulique en vue de l'entraînement d'un convoyeur d'amenée (22) et/ou d'une tête de récolte (20).

2. Moissonneuse (10) selon la revendication 1, comprenant :
un premier moteur à combustion (36) supporté sur le châssis (12), avec un premier vilebrequin (40), et
un deuxième moteur à combustion (38) supporté sur le châssis (12), avec un deuxième vilebrequin (42),
un engrenage de liaison disposé, dans la direction de marche avant, avant les moteurs à combustion (36, 38), étant ou pouvant être connecté par entraînement au premier vilebrequin (40), au deuxième vilebrequin (42) et à la poulie à courroie (82),
les deux moteurs à combustion (36, 38) étant disposés latéralement l'un à côté de l'autre par rapport à la direction de marche avant et les vilebrequins (40, 42) s'étendant dans la direction de marche avant,
et l'engrenage de liaison comprenant deux renvois d'angle (52, 64) qui sont ou peuvent être connectés par entraînement à chaque fois à l'un des vilebrequins (40, 42) et à l'arbre transversal disposé transversalement (54, 58, 80, 90).

3. Moissonneuse (10) selon la revendication 2, dans laquelle un premier embrayage (56) est disposé entre le premier vilebrequin (40) et l'arbre transversal (54, 58, 80, 90).

4. Moissonneuse (10) selon la revendication 3, dans laquelle le premier embrayage (56) est disposé entre le premier vilebrequin (40) et un premier renvoi d'angle (52).

5. Moissonneuse (10) selon l'une quelconque des revendications 2 à 4, dans laquelle un deuxième embrayage (60) est disposé entre le deuxième vilebrequin (42) et l'arbre transversal (54, 58, 80, 90).

6. Moissonneuse (10) selon la revendication 5, dans laquelle le deuxième embrayage (60) est disposé entre le deuxième vilebrequin (42) et un deuxième renvoi d'angle (64).

7. Moissonneuse (10) selon l'une quelconque des revendications 2 à 6, dans laquelle un groupe de pompe (74) est en liaison d'entraînement avec le côté de prise de force des embrayages (56, 60).

8. Moissonneuse (10) selon la revendication 7, dans laquelle le groupe de pompe (74) peut être entraîné par une liaison d'entraînement qui peut être entraînée par un arbre (104) disposé entre le premier embrayage (56) et le premier renvoi d'angle (52) espacé de la poulie à courroie.

9. Moissonneuse (10) selon l'une quelconque des revendications 2 à 8, dans laquelle les moteurs à combustion (36, 38) sont fixés indépendamment l'un de l'autre au châssis (12) de la moissonneuse.

10. Moissonneuse (10) selon l'une quelconque des revendications 2 à 9, dans laquelle les renvois d'angle (52, 64) sont à chaque fois fixés au moteur à combustion (36, 38).

11. Moissonneuse (10) selon l'une quelconque des revendications 2 à 10, dans laquelle l'arbre transversal (58, 80, 90) se compose de plusieurs portions séparées (58, 80, 90) entre les renvois d'angle (52, 64) et un arbre d'articulation (92) est inséré entre les portions (58, 90) de l'arbre transversal (58, 80, 90) à chaque fois raccordées à un renvoi d'angle (52, 64).

12. Moissonneuse (10) selon l'une quelconque des revendications précédentes, **caractérisée en ce que** les renvois d'angle (52, 64) sont des engrenages à pignons coniques.
